# FASCICULE DE BREVET EUROPEEN

(11) **EP 0 652 549 B1**
(45) Date de publication et mention de la délivrance du brevet: **03.05.2000**
(21) Numéro de dépôt: 94402490.0
(22) Date de dépôt: 04.11.1994
(51) Int. Cl.: G11B 5/31, G11B 5/49, G11B 5/48

(54) **Tête magnétique d'enregistrement/lecture**
Magnetischer Aufnahme-/Wiedergabekopf
Magnetic recording/reading head

(30) Priorité: 09.11.1993 FR 9313365
(43) Date de publication de la demande: 10.05.1995
(73) Titulaire: THOMSON-CSF, 75008 Paris (FR)
(72) Inventeur: Colineau, Joseph, F-92402 Courbevoie Cédex (FR)

(56) Documents cités:
- EP-A- 0 340 085
- EP-A- 0 409 675
- WO-A-90/16063
- FR-A- 2 100 675

## Description

L'invention concerne une tête magnétique d'enregistrement/lecture et plus particulièrement une tête magnétique avec des conducteurs de bobinage intégrés.

Diverses technologies planaires ont été proposées, permettant la réalisation, sur une surface, de têtes magnétiques à haut niveau d'intégration.

Par ailleurs, des procédés de multiplexage ont été décrits, permettant d'adresser avec un nombre réduit de connexions un grand nombre de têtes magnétiques.

L'inconvénient des structures à haut niveau d'intégration proposées est que les entrefers ne sont pas alignés, ce qui nécessite l'emploi de mémoires pour tenir compte des décalages spatiaux entre pistes, et restreint la mise en oeuvre de codes d'enregistrement bidimensionnels.

La structure présentée permet au contraire d'aligner des entrefers des têtes magnétiques et dans une certaine mesure, de réaliser une tête "continue" (non discrète) ce qui la rend intéressante pour l'écriture sur bande de formats variés.

L'invention concerne donc une tête magnétique d'enregistrement/lecture comportant au moins un premier conducteur, deux couches en matériau magnétique situées sensiblement dans un même plan au-dessus du conducteur, les deux couches étant séparées magnétiquement par un élément d'entrefer faisant un angle différent de 0° et de 90° avec la direction du conducteur, et la longueur de l'entrefer étant nettement supérieure à la largeur du premier conducteur de telle façon que ce soit l'intersection de ce conducteur avec l'entrefer qui détermine la largeur de l'information écrite/lue.

Les différents objets et caractéristiques de l'invention apparaîtront plus clairement dans la description qui va suivre et dans les figures annexées qui représentent :
- les figures 1a et 1b, un exemple de réalisation simplifié d'une tête magnétique selon l'invention ;
- les figures 2a, 2b et 3, un exemple de réalisation d'une tête magnétique à deux conducteurs selon l'invention ;
- les figures 4 et 5, des modes de réalisation de conducteurs d'une tête magnétique selon l'invention ;
- les figures 6 à 10, différents modes de réalisation d'une tête magnétique selon l'invention ;
- la figure 11, une vue en coupe d'une tête magnétique telle que celle de la figure 9.

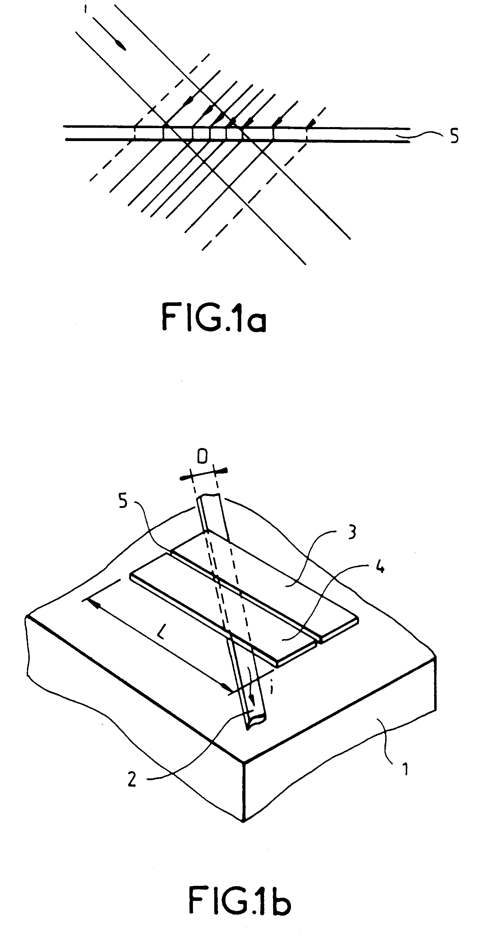

La structure d'un élément de tête magnétique réalisée selon l'invention est présentée en figures 1a et 1b. Cette structure comporte, sur un substrat 1, un conducteur 2 et deux couches 3 et 4 d'un matériau de bonne perméabilité magnétique. Les deux couches 3 et 4 sont séparées par un espace d'entrefer 5. Le conducteur 2 est orienté selon un angle différent de 0 et de 90° par rapport à la direction de l'entrefer. La longueur de l'entrefer L est nettement supérieure à la largeur D du conducteur. Lorsque le conducteur est alimenté par un courant i, il y a induction d'un champ magnétique. Dans la zone d'intersection du conducteur 2 et de l'entrefer 5, les lignes de champ magnétique sont interrompues par l'entrefer. Un support d'enregistrement magnétique (non représenté) placé au-dessus des couches 3 et 4 pourra offrir un parcours facile pour le champ magnétique et le support d'enregistrement pourra être magnétisé en fonction de ce champ magnétique. Dans l'entrefer 5, les lignes de champ magnétique prennent le parcours le plus court, c'est-à-dire perpendiculaire à l'entrefer comme cela est représenté en figure 1a. Un support d'enregistrement sera donc aimanté selon une direction d'aimantation perpendiculaire à l'entrefer.

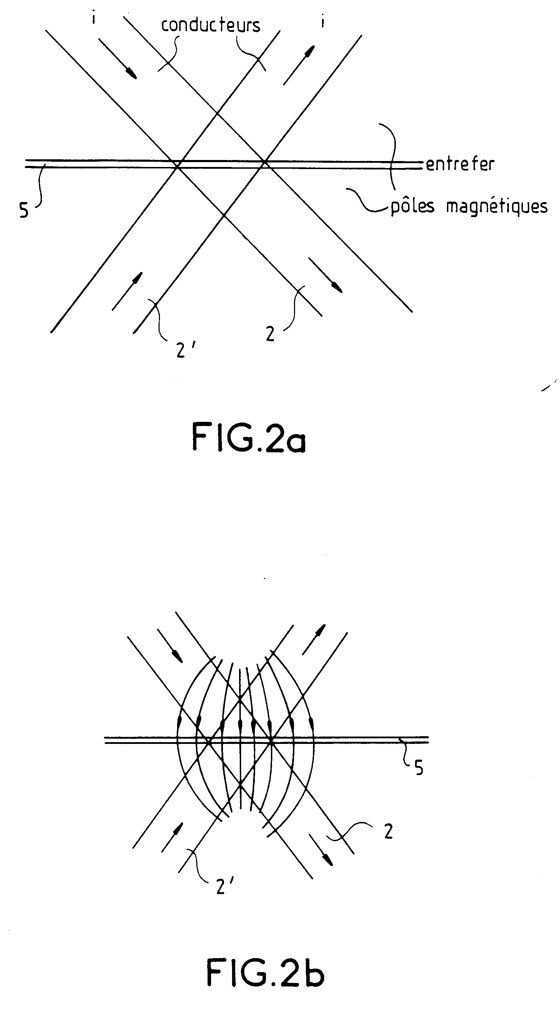

La tête magnétique des figures 2a et 2b comportent deux conducteurs. Sur ces figures on a représenté que l'entrefer 5 séparant les deux couches magnétiques 3 et 4. Les deux conducteurs se croisent au niveau de l'entrefer 5 et sont obliques par rapport à la direction de l'entrefer.

Dans une configuration particulièrement avantageuse, les deux conducteurs sont orthogonaux entre eux et inclinés chacun de 45° par rapport à la direction de l'entrefer.

Lorsqu'ils sont parcourus par des courants i, ils génèrent un champ magnétique dont la forme est donnée en figure 2b. Si les courants ne sont pas égaux, la distribution du champ n'est plus symétrique, mais celui-ci sort toujours orthogonal à la direction de l'entrefer.

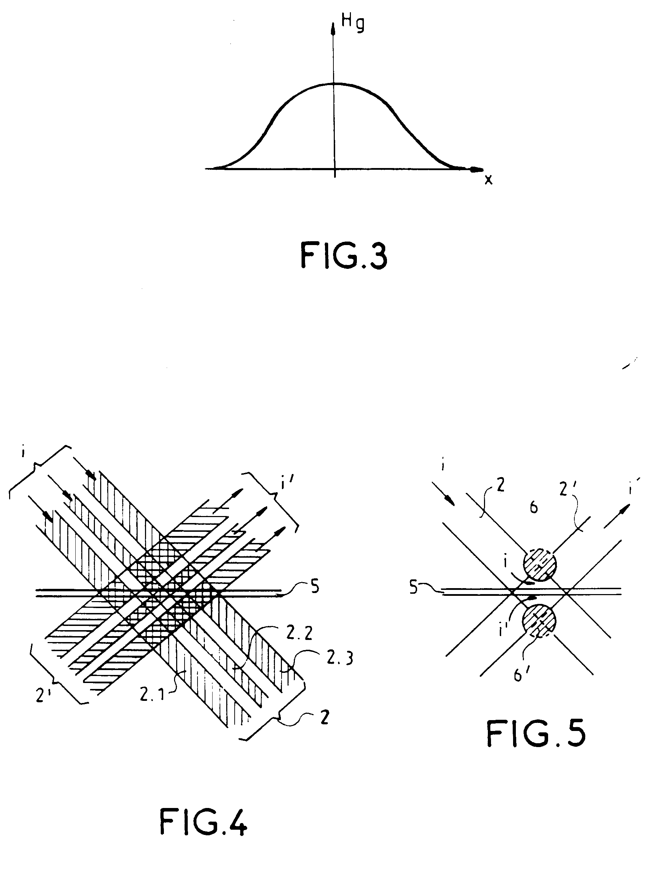

Le profil de champ créé au niveau de l'entrefer est donné en figure 3.

Pour améliorer la définition de la largeur des pistes écrites, plusieurs dispositions sont possibles.

C'est ainsi que, sur la figure 4, un conducteur 2 comporte un conducteur central 2.2 et deux conducteurs latéraux 2.1 et 2.3. Si tous ces conducteurs sont parcourus par un même courant, les conducteurs latéraux 2.1 et 2.3 induisent un champ plus important que le conducteur central 2.2. Ainsi on rend le profil du champ induit plus rectangulaire que celui représenté sur la figure 3.

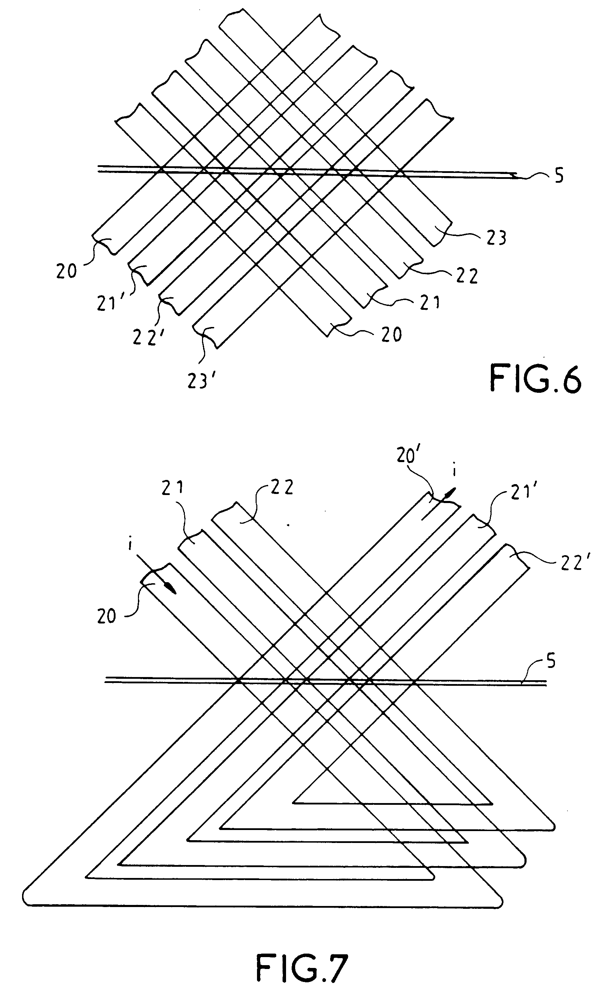

Sur la figure 5, les conducteurs 2 et 2' sont gravés (gravures 6 et 6') de part et d'autre de l'entrefer pour que le courant dans chaque conducteur ait tendance à être parallèle à l'entrefer 5.

On peut également réduire localement la conductivité des conducteurs (dans les zones 6 et 6' par exemple) par des procédés d'implantation.

Pour réaliser une tête destinée à des pistes étroites, on pourra admettre de conserver un profil de champ mal défini et on pourra jouer sur l'aspect séquentiel de l'écriture des pistes associé à la non linéarité de la bande pour définir les pistes dans le sens transversal. Il faut noter que le procédé d'écriture dans ce cas s'apparente à celui d'une tête classique dans le sens longitudinal où le bord traînant du champ définit la position de la transition. Ce mode d'écriture est particulièrement adapté à la lecture par tête multipistes en ligne à haute densité de pistes tel que décrit dans la Demande de Brevet FR-A-2 656 723 puisque l'on peut facilement corriger les écarts de positions physiques des pistes ainsi que la diaphonie de piste à piste qui peuvent être relativement élevées dans ce mode de fonctionnement.

La réalisation d'une tête multipiste selon l'invention peut s'obtenir par juxtaposition d'éléments de têtes décrits ci-dessus. La simplicité de la structure des éléments d'excitation permet de la juxtaposer avec un pas très petit, limité par la finesse de gravure et par la densité de courant maximum admissible (figures 6 et 7). Sur la figure 6, à chaque conducteur tel que 20 est associé un conducteur tel que 20' et ces conducteurs se croisent sous l'entrefer 5. Chaque croisement de deux conducteurs constitue le bobinage d'une tête magnétique. La combinaison des excitations de ces conducteurs permet la commande d'une tête magnétique.

Sur la figure 7, chaque conducteur tel que 20 est rebouclé sur son conducteur homologue tel que 20'. Les deux conducteurs sont donc commandés en même temps.

Lorsque le nombre d'éléments ainsi intégrés dans une tête multipiste devient important, il est avantageux de les exciter selon un mode multiplexé tel que décrit dans la demande de brevet FR-A-2 630 853 correspondant à la demande EP-A-0 340 085.

Dans ce cas la commande s'obtient par superposition d'un courant d'amplitude faible représentant les donnés à écrire, et d'un courant d'amplitude suffisante pour amener le média d'enregistrement au seuil de basculement.

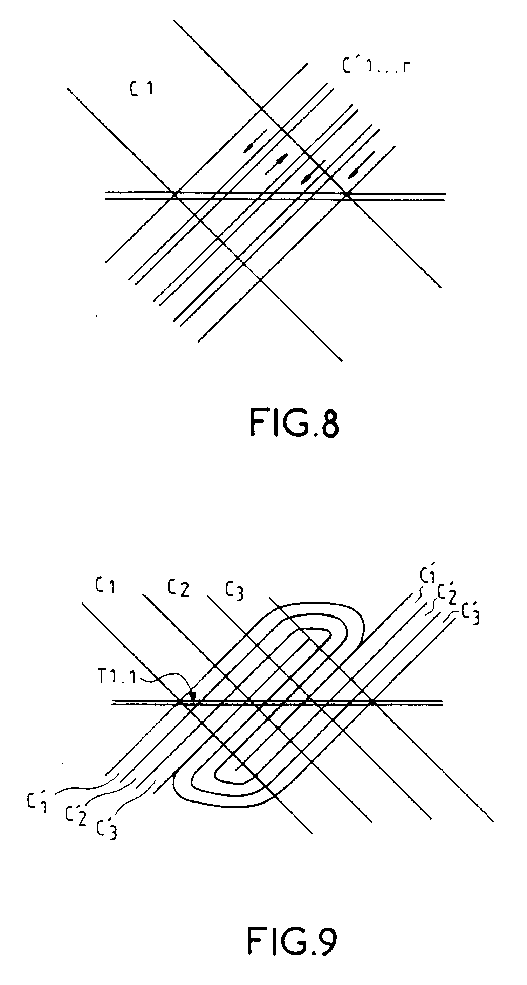

Une structure permettant ce mode de fonctionnement est représenté en figure 8. C'1 ... n représentent par exemple les conducteurs de données et C1 un conducteur de sélection. Un conducteur C1 croise donc plusieurs conducteurs C'1 ... n au niveau de l'entrefer soit en raison de sa largeur soit en raison de son inclinaison par rapport à la direction dé l'entrefer. Cette structure se répète n fois.

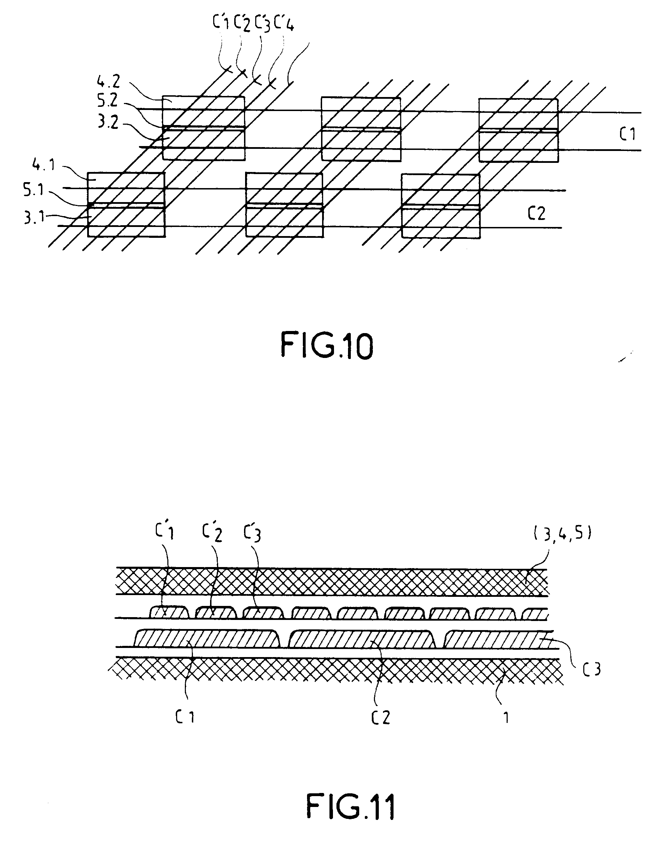

Sur la figure 9, chaque conducteur de données C'₁, C'₂, C'₃ est rebouclé plusieurs fois pour croiser plusieurs fois l'entrefer 5. A chaque croisement de l'entrefer, l'ensemble de conducteur C'₁, C'₂, C'₃ croise un conducteur de sélection C1 puis C2, puis C3, etc. Il est ainsi possible de réaliser une commande des têtes magnétiques du type commande matricielle. Par exemple, la commande de la tête magnétique T1.1 se faisant en commandant les conducteurs C1 et C'₁.

La figure 10 représente une variante de réalisation dans laquelle on dispose plusieurs couches de matériau magnétique telles que 3.1, 4.1 et 3.2, 4.2 séparées par des entrefers 5.1, 5.2, les entrefers étant alignés selon différentes lignes.

Chaque conducteur de sélection C1, C2 est associé à une ligne d'entrefer telle que C1 pour la ligne commençant par l'entrefer 5.1. Selon l'exemple de la figure 10 les conducteurs de sélection sont parallèles aux lignes d'entrefers.

Chaque conducteur de donnée C'₁, C'₂, C'₃, C'₄ croise un entrefer (5.1, 5.2) de chaque ligne d'entrefers.

La disposition de la figure 10 peut donc être commandée sous forme matricielle. Par exemple la commande de la tête magnétique T1.1 se fait par commande des conducteurs C1 et C'₁.

La figure 11 représente en coupe une tête magnétique selon l'invention. Par exemple cette coupe est représentative de la tête magnétique de la figure 9.

Sur le substrat 1, on trouve les conducteurs C1 à C3 parallèles entre eux. Au-dessus de ces conducteurs on trouve les conducteurs C'₁, C'₂, C'₃ également parallèles entre eux. Enfin au-dessus des conducteurs C'₁ à C'₃, on trouve le plan des pôles magnétiques 3 et 4 séparés par l'entrefer 5.

Il est plus avantageux du point de vue de la dissipation thermique d'utiliser les conducteurs à plus faible résistance pour les fils de données.

Des variantes de la structure de la figure 8 peuvent être réalisées par exemple en séparant les fils de données en plusieurs fils alimentés en série, de manière à augmenter l'impédance du bobinage, ou encore en rendant la nappe d'excitation de données plus large que la zone utile de n têtes afin d'augmenter l'homogénéité du champ produit, ou encore en façonnant comme indiqué plus haut la répartition spatiale de la densité de courant, toujours pour améliorer l'homogénéité.

Les technologies couches minces de bobinages mises en oeuvre dans les procédés de fabrication classique des têtes magnétiques intégrées conviennent à la réalisation des bobinages décrits ici.

La structure magnétique est constituée d'une partie inférieure (substrat magnétique ou couche mince magnétique sur substrat non magnétique pour la fermeture du flux), cette partie arrière n'étant pas strictement indispensable du point de vue de la fonctionnalité, et d'une partie supérieure qui pourra être réalisée selon une technologie planaire telle que celle décrite dans la demande de brevet FR-A-2 605 783 sur le substrat équipé de ses nappes d'excitation, après planarisation du relief.

## Revendications

1. Tête magnétique d'enregistrement/lecture comportant au moins un premier conducteur (2), deux couches en matériau magnétique (3, 4) situées sensiblement dans un même plan au-dessus du conducteur, les deux couches étant séparées magnétiquement par un élément d'entrefer (5), l'élément d'entrefer faisant un angle différent de 0° et de 90° avec la direction du conducteur, et la longueur de l'entrefer étant nettement supérieure à la largeur du premier conducteur de telle façon que ce soit l'intersection de ce conducteur avec l'entrefer qui détermine la largeur de l'information écrite/lue.

2. Tête magnétique selon la revendication 1, caractérisé en ce qu'une pièce ou couche en matériau magnétique (1) est située du côté opposé aux deux couches en matériau magnétique (3, 4) par rapport au conducteur (2).

3. Tête magnétique selon la revendication 1, caractérisée en ce qu'elle comporte au moins un deuxième conducteur (2') qui croise un premier conducteur (2) sensiblement au point de croisement de celui-ci avec l'entrefer (5).

4. Tête magnétique selon la revendication 3, caractérisée en ce qu'un premier conducteur et le deuxième conducteur (2, 2') sont dans des plans parallèles et ont des directions symétriques par rapport à un plan normal à la direction de l'entrefer (5).

5. Tête magnétique selon la revendication 4, caractérisée en ce que chaque conducteur (2, 2') forme un angle de 45° avec la direction de l'entrefer (5).

6. Tête magnétique selon la revendication 1, caractérisée en ce que le premier conducteur comporte plusieurs conducteurs parallèles (20, 21, 22, 23).

7. Tête magnétique selon la revendication 3, caractérisée en ce que les premier et deuxième conducteurs comportent respectivement plusieurs premiers conducteurs (20, 21, 22, 23) parallèles entre eux et plusieurs deuxièmes conducteurs (20', 21', 22', 23') parallèles entre eux.

8. Tête magnétique selon la revendication 1, caractérisée en ce que chaque conducteur comporte plusieurs conducteurs élémentaires parallèles entre eux situés dans un plan parallèle à l'entrefer (5), un conducteur central étant d'une section déterminée et des conducteurs latéraux étant d'une section supérieure à cette section déterminée.

9. Tête magnétique selon la revendication 1, caractérisée en ce que chaque conducteur possède un rétrécissement de part et d'autre de l'entrefer de façon à constituer au niveau de l'entrefer une zone de conducteur sensiblement parallèle à l'entrefer.

10. Tête magnétique selon la revendication 3, caractérisée en ce qu'elle comporte plusieurs premiers conducteurs (C'_{1;;;2}) qui croisent un deuxième conducteur (C₁) dans la zone de croisement de celui-ci avec l'entrefer.

11. Tête magnétique selon la revendication 10, caractérisée en ce que le deuxième conducteur est d'une largeur supérieure à chaque premier conducteur.

12. Tête magnétique selon la revendication 11, caractérisée en ce que le deuxième conducteur (C₁) est parallèle à un entrefer (5).

13. Tête magnétique selon la revendication 3, caractérisée en ce que le deuxième conducteur est rebouclé sur le premier conducteur.

14. Tête magnétique selon l'une des revendications 3 ou 10, caractérisée en ce que le premier conducteur coupe plusieurs fois le plan de l'entrefer et qu'à chaque intersection il est sécant avec le plan d'un deuxième conducteur différent.

## Claims

1. A magnetic write/read head comprising at least one first conductor (2), two layers of magnetic material (3, 4) situated substantially in the same plane above the conductor, said two layers being magnetically separated by a gap element (5), said gap element forming an angle different from 0° and different from 90° with the direction of the conductor, and the length of the gap being substantially greater than the width of the first conductor in such a way that the intersection of said conductor with the gap determines the width of the information element which is written/read.

2. A magnetic head according to claim 1, characterised in that a part or layer made of magnetic material (1) is situated on the side opposite the two layers of magnetic material (3, 4) with respect to the conductor (2).

3. A magnetic head according to claim 1, characterised in that it comprises at least one second conductor (2') which intersects a first conductor (2) substantially at the point of intersection of the latter with the gap (5).

4. A magnetic head according to claim 3, characterised in that one first conductor and the second conductor (2, 2') are in parallel planes and extend in directions which are symmetrical with respect to a plane normal to the direction of the gap (5).

5. A magnetic head according to claim 4, characterised in that each conductor (2, 2') forms an angle of 45° with the direction of the gap (5).

6. A magnetic head according to claim 1, characterised in that the first conductor comprises a plurality of parallel conductors (20, 21, 22, 23).

7. A magnetic head according to claim 3, characterised in that the first and second conductors comprise a plurality of first, mutually parallel conductors (20, 21, 22, 23) and a plurality of second, mutually parallel conductors (20', 21', 22', 23'), respectively.

8. A magnetic head according to claim 1, characterised in that each conductor comprises a plurality of mutually parallel elementary conductors situated in a plane parallel to the gap (5), wherein a central conductor has a defined cross-section and the side conductors have a cross-section which is larger than said defined cross-section.

9. A magnetic head according to claim 1, characterised in that each conductor has a narrow portion on both sides of the gap so as to constitute, at the gap, a conductor zone which is substantially parallel to the gap.

10. A magnetic head according to claim 3, characterised in that it comprises a plurality of first conductors (C'₁;;;₂) which intersect a second conductor (C₁) in the region of intersection of the latter with the gap.

11. A magnetic head according to claim 10, characterised in that the second conductor has a width which is greater than that of each first conductor.

12. A magnetic head according to claim 11, characterised in that the second conductor (C₁) is parallel to a gap (5).

13. A magnetic head according to claim 3, characterised in that the second conductor is looped to the first conductor.

14. A magnetic head according to either one of claims 3 or 10, characterised in that the first conductor intersects the plane of the gap a plurality of times, and at each intersection it is secant with the plane of a different second conductor.

## Patentansprüche

1. Magnetischer Aufnahme-/Wiedergabekopf mit wenigstens einem ersten Leiter (2), zwei Schichten (3, 4) aus Magnetmaterial, die im wesentlichen in ein und derselben Ebene über dem Leiter liegen, wobei die zwei Schichten durch ein Luftspaltelement (5) magnetisch getrennt sind, wobei das Luftspaltelement mit der Richtung des Leiters einen von 0° und von 90° verschiedenen Winkel bildet und die Länge des Luftspalts deutlich über der Breite des ersten Leiters liegt, so daß die Kreuzungsstelle dieses Leiters mit dem Luftspalt die Breite der eingeschriebenen/wiedergegebenen Information bestimmt.

2. Magnetkopf nach Anspruch 1, dadurch gekennzeichnet, daß ein Teil oder eine Schicht (1) aus Magnetmaterial an der bezüglich des Leiters (2) den zwei Schichten (3, 4) gegenüberliegenden Seite liegt.

3. Magnetkopf nach Anspruch 1, dadurch gekennzeichnet, daß er wenigstens einen zweiten Leiter (2') aufweist, der einen ersten Leiter (2) im wesentlichen an dessen Kreuzungsstelle mit dem Luftspalt (5) kreuzt.

4. Magnetkopf nach Anspruch 3, dadurch gekennzeichnet, daß ein erster Leiter und der zweite Leiter (2, 2') in parallelen Ebenen liegen und bezüglich einer zu der Richtung des Spalts (5) senkrechten Ebene symmetrische Richtungen haben.

5. Magnetkopf nach Anspruch 4, dadurch gekennzeichnet, daß jeder Leiter (2, 2') mit der Richtung des Luftspalts (5) einen Winkel von 45° bildet.

6. Magnetkopf nach Anspruch 1, dadurch gekennzeichnet, daß der erste Leiter mehrere parallele Leiter (20, 21, 22, 23) aufweist.

7. Magnetkopf nach Anspruch 3, dadurch gekennzeichnet, daß der erste und der zweite Leiter mehrere erste, zueinander parallele Leiter (20, 21, 22, 23) bzw. mehrere zweite, zueinander parallele Leiter (20', 21', 22', 23') aufweisen.

8. Magnetkopf nach Anspruch 1, dadurch gekennzeichnet, daß jeder Leiter mehrere zueinander parallele Elementarleiter aufweist, die in einer zu dem Luftspalt (5) parallelen Ebene liegen, wobei ein zentraler Leiter einen bestimmten Querschnitt hat und seitliche Leiter einen größeren Querschnitt als dieser bestimmte Querschnitt haben.

9. Magnetkopf nach Anspruch 1, dadurch gekennzeichnet, daß jeder Leiter beiderseits des Luftspalts eine Verengung hat, so daß auf Höhe des Luftspalts eine im wesentlichen zu dem Luftspalt parallele Leiterzone gebildet ist.

10. Magnetkopf nach Anspruch 3, dadurch gekennzeichnet, daß er mehrere erste Leiter (C'_{1;;;2}) aufweist, die einen zweiten Leiter (C₁) in dessen Kreuzungszone mit dem Luftspalt kreuzen.

11. Magnetkopf nach Anspruch 10, dadurch gekennzeichnet, daß der zweite Leiter breiter als jeder erste Leiter ist.

12. Magnetkopf nach Anspruch 11, dadurch gekennzeichnet, daß der zweite Leiter (C₁) parallel zu einem Luftspalt (5) liegt.

13. Magnetkopf nach Anspruch 3, dadurch gekennzeichnet, daß der zweite Leiter zu dem ersten Leiter schleifenförmig gebogen ist.

14. Magnetkopf nach einem der Ansprüche 3 oder 10, dadurch gekennzeichnet, daß der erste Leiter die Ebene des Luftspalts mehrmals schneidet und er an jeder Kreuzungsstelle die Sekante zu der Ebene eines anderen zweiten Leiters bildet.
